# EUROPÄISCHE PATENTSCHRIFT

(11) **EP 2 913 887 B1**
(45) Veröffentlichungstag und Bekanntmachung des Hinweises auf die Patenterteilung: **28.09.2016**
(21) Anmeldenummer: 14166890.5
(22) Anmeldetag: 02.05.2014
(51) Int. Cl.: H01Q 1/12, F16B 7/04, F16B 2/06, F16B 2/12

(54) **Antennenhalter**
Antenna holder
Support d'antennes

(30) Priorität: 26.02.2014 EP 14156735
(43) Veröffentlichungstag der Anmeldung: 02.09.2015
(73) Patentinhaber: Engbarth, Hans-Georg, 47608 Geldern (DE); Eyckmann, Heinrich-Bartholomäus, 47608 Geldern (DE)
(72) Erfinder: Engbarth, Hans-Georg, 47608 Geldern (DE); Eyckmann, Heinrich-Bartholomäus, 47608 Geldern (DE)
(74) Vertreter: Fischer, Uwe

(56) Entgegenhaltungen:
- WO-A1-2009/091299
- WO-A1-2014/028830
- DE-A1-102007 022 459
- DE-A1-102008 046 181
- DE-A1-102009 014 653

## Beschreibung

Die Erfindung bezieht sich auf einen Antennenhalter mit den Merkmalen gemäß dem Oberbegriff des Patentanspruchs 1.

Ein derartiger Antennenhalter ist aus der deutschen Offenlegungsschrift 10 2007 022 459 A1 bekannt. Der vorbekannte Antennenhalter weist eine Montagebasis, einen Antennenmast und Haltemittel zur Befestigung des Antennenmastes an der Montagebasis auf. Die Montagebasis umfasst zwei ineinandergreifende Rohre, und zwar ein Außenrohr und ein Innenrohr. Die Haltemittel sind durch ein Klemmelement in Form einer Schelle und ein Gegenklemmelement in Form einer Gegenschelle gebildet, die durch eine Schraubverbindung derart miteinander verbindbar sind, dass die Schelle und die Gegenschelle einen Abschnitt der Montagebasis zwischen ihren Schelleninnenseiten einklemmen.

Die Druckschrift WO 2009/091299 A1 offenbart eine Haltevorrichtung für Rohre. Die Haltevorrichtung umfasst Plattenelemente, die aus Kohlenstofffaserkompositmaterial bestehen. Die Plattenelemente werden ineinander gesteckt und anschließend verklebt.

Die Druckschrift WO 2014/028830 A1 offenbart einen Antennenhalter, wobei ein Klemmelement zwei Endabschnitte und zwei Stützelemente aufweist.

Der Erfindung liegt die Aufgabe zugrunde, einen Antennenhalter anzugeben, der eine Montage besonders großflächiger Antennen ermöglicht.

Diese Aufgabe wird ausgehend von einem Antennenhalter der eingangs angegebenen Art erfindungsgemäß durch die kennzeichnenden Merkmale des Anspruchs 1 gelöst. Vorteilhafte Ausgestaltungen des erfindungsgemäßen Antennenhalters sind in Unteransprüchen angegeben.

Ein wesentlicher Vorteil des erfindungsgemäßen Antennenhalters ist darin zu sehen, dass durch das Stützelement die Haltekraft der Haltemittel vergrößert wird und dadurch die von dem Antennenhalter tragbaren Windlasten größer sind als bei vorbekannten Antennenhaltern.

Erfinderseitig wurde festgestellt, dass eine Verstärkung der Haltekräfte im Bereich des Mastfußes eine besonders große Wirkung auf die resultierende Windlasttragkraft hat. Demgemäß wird es als vorteilhaft angesehen, wenn das Stützelement - entlang der Längsrichtung des Antennenmasts in Richtung Montagebasis gesehen - unterhalb des Mastfußes angeordnet ist.

Besonders vorteilhaft ist es, wenn das Klemmelement im Bereich des Mastfußes ein Durchgangsloch aufweist, in das der Mastfuß zumindest eingeführt ist oder durch das der Mastfuß hindurchgeführt ist und das Stützelement zumindest abschnittsweise unterhalb des Durchgangsloches liegt.

Besonders bevorzugt passiert das Stützelement - entlang der Längsrichtung des Antennenmasts in Richtung Montagebasis gesehen - in einer Ebene unterhalb des Durchgangsloches die Mitte des Durchgangsloches.

Vorzugsweise ist der Mastfuß an dem Stützelement befestigt, vorzugsweise angeschweißt.

Besonders vorteilhaft ist es, wenn der Mastfuß sowohl auf der der Montagebasis abgewandten Außenseite des Klemmelements an dem Klemmelement befestigt, insbesondere verschweißt, als auch auf der der Montagebasis zugewandten Innenseite des Klemmelements an dem Klemmelement befestigt, insbesondere verschweißt, ist. Durch eine doppelseitige Anbindung lässt sich ein Abknicken des Mastfußes auch bei sehr großer Krafteinwirkung verhindern.

Mit Blick auf maximale Haltkräfte an der Schnittstelle zwischen dem Mastfuß und dem Klemmelement wird es als vorteilhaft angesehen, wenn der Mastfuß auf der der Montagebasis abgewandten Außenseite des Klemmelements an dem Klemmelement befestigt, insbesondere mittels einer außenliegenden Schweißnaht verschweißt, ist, der Mastfuß auf der der Montagebasis zugewandten Innenseite des Klemmelements an dem Klemmelement befestigt, insbesondere mittels einer innenliegenden Schweißnaht verschweißt, ist und das Stützelement mit dem durch das Durchgangsloch hindurch geführten Abschnitt des Mastfußes verbunden, insbesondere - vorzugsweise mittels einer zusätzlichen Schweißnaht oder mittels eines oder mehrerer Schweißpunkte, verschweißt ist.

Das Stützelement weist vorzugsweise eine Aussparung auf, die auf der Montagebasis aufliegt bzw. in die die Montagebasis eingreift. Besonders bevorzugt ist das Stützelement im Bereich der Aussparung mit einem oder mehreren Vorsprüngen, insbesondere zackenförmigen Vorsprüngen versehen, die in Richtung Montagebasis gerichtet sind und bei einem Einklemmen der Montagebasis zwischen dem Klemmelement und dem Gegenklemmelement in die Montagebasis eingedrückt werden.

Das Stützelement ist vorzugsweise durch eine Platte gebildet, die sich unter einem rechten Winkel von der Innenseite des Klemmelements, insbesondere unter einem rechten Winkel von der Innenseite einer Trägerplatte des Klemmelements, in Richtung auf die Montagebasis erstreckt und parallel zwischen den zwei umgebogenen parallelen Endabschnitten des Klemmelements liegt. Die Platte ist vorzugsweise mit einer Plattenstirnseite an der Innenseite des Klemmelements angebracht, insbesondere angeschweißt. Besonders bevorzugt ist das Stützelement sowohl an der Innenseite des Klemmelements als auch an dem Mastfuß angebracht, insbesondere angeschweißt.

Das Stützelement und das Klemmelement können alternativ durch Abschnitte eines einteiligen Bauteils, vorzugsweise eines Gussteiles oder eines Strangpressprofilbauteils, gebildet sein.

Auch wird eine weitere andere Ausgestaltung als vorteilhaft angesehen, bei der das Stützelement durch einen Abschnitt des Antennenmastes gebildet ist, der sich an den Mastfuß einteilig anschließt oder diesen bildet.

Vorzugsweise ist das Klemmelement durch ein Bauteil gebildet.

Die zwei parallelen Endabschnitte stehen vorzugsweise in einem rechten Winkel auf einer Trägerplatte des Klemmelements, die parallel zur Montagebasis ausgerichtet ist. Bei dem Bauteil kann es sich beispielsweise um ein Blechteil handeln, dessen parallele Endabschnitte durch um einen rechten Winkel umgebogene Abschnitte der Trägerplatte gebildet sind.

Das Stützelement und das Durchgangsloch sind bevorzugt mittig zwischen den zwei parallelen Endabschnitten des Klemmelements angeordnet. Alternativ kann das Stützelement auch an anderer Stelle zwischen den parallelen Endabschnitten angeordnet sein; auch ist es möglich, zur Abstützung mehrere Stützelemente zwischen den parallelen Endabschnitten anzuordnen.

Als besonders vorteilhaft wird es angesehen, wenn auf der Innenseite des Gegenklemmelements mindestens ein Gegenstützelement angeordnet ist, das sich in Richtung auf die Montagebasis erstreckt und sich auf der Montagebasis abstützt. Durch das Gegenstützelement wird die Haltekraft der Haltemittel vergrößert, so dass die von dem Antennenhalter tragbaren Windlasten besonders groß sind.

Wie erwähnt, wurde erfinderseitig festgestellt, dass eine Verstärkung der Haltekräfte im Bereich des Mastfußes eine besonders große Wirkung auf die resultierende Windlasttragkraft hat. Demgemäß wird es als vorteilhaft angesehen, wenn das Gegenstützelement - entlang der Längsrichtung des Antennenmasts in Richtung Montagebasis gesehen - unterhalb des Mastfußes, insbesondere unterhalb eines Durchgangsloches im Klemmelement für den Mastfuß, angeordnet ist.

Das Gegenstützelement weist vorzugsweise eine Aussparung auf, die auf der Montagebasis aufliegt bzw. in die die Montagebasis eingreift. Besonders bevorzugt ist das Gegenstützelement im Bereich der Aussparung mit einem oder mehreren Vorsprüngen, insbesondere zackenförmigen Vorsprüngen versehen, die in Richtung Montagebasis gerichtet sind und bei einem Einklemmen der Montagebasis zwischen dem Klemmelement und dem Gegenklemmelement in die Montagebasis eingedrückt werden.

Das Gegenstützelement ist vorzugsweise durch eine Platte gebildet, die sich unter einem rechten Winkel von der Innenseite des Gegenklemmelements, insbesondere unter einem rechten Winkel von der Innenseite einer Trägerplatte des Gegenklemmelements, in Richtung auf die Montagebasis erstreckt und parallel zwischen den zwei umgebogenen parallelen Endabschnitten des Gegenklemmelements liegt.

Die Platte ist vorzugsweise mit einer Plattenstirnseite an der Innenseite des Gegenklemmelements angebracht, insbesondere angeschweißt.

Das Gegenstützelement und das Gegenklemmelement können alternativ durch Abschnitte eines einteiligen Bauteils, vorzugsweise eines Gussteiles oder eines Strangpressprofilbauteils, gebildet sein.

Vorzugsweise ist das Gegenklemmelement durch ein Bauteil gebildet, bei dem zwei parallele Endabschnitte jeweils eine äußere Stützwand bilden, die sich auf der Montagebasis abstützt. Die zwei parallelen Endabschnitte stehen vorzugsweise in einem rechten Winkel auf einer Trägerplatte des Gegenklemmelements, die parallel zur Montagebasis ausgerichtet ist. Bei dem Bauteil kann es sich beispielsweise um ein Blechteil handeln, dessen parallele Endabschnitte durch um einen rechten Winkel umgebogene Abschnitte der Trägerplatte gebildet sind.

Das Gegenstützelement ist bevorzugt mittig zwischen den zwei parallelen Endabschnitten des Gegenklemmelements angeordnet. Alternativ kann das Gegenstützelement auch an anderer Stelle zwischen den parallelen Endabschnitten angeordnet sein; auch ist es möglich, zur Abstützung mehrere Gegenstützelemente zwischen den parallelen Endabschnitten anzuordnen.

Das Gegenklemmelement kann ein rinnenförmiges Teil aufweisen, das auf der Unterseite des Außenrohres der Montagebasis flächig anliegt und durch eine Schraubverbindung in Richtung auf die Unterseite der Montagebasis gezogen wird.

Als besonders vorteilhaft wird es angesehen, wenn - entlang der Längsrichtung des Antennenmastes gesehen - das Stützelement und das Gegenstützelement zumindest abschnittsweise hintereinander liegen oder fluchten.

Auch ist es von Vorteil, wenn zwischen dem Stützelement und einem der zwei parallelen Endabschnitte des Klemmelements zumindest ein erstes zusätzliches Stützelement und zwischen dem Stützelement und dem anderen der zwei parallelen Endabschnitte des Klemmelements zumindest ein zweites zusätzliches Stützelement angebracht, vorzugsweise angeschweißt, oder einteilig angeformt ist.

Alternativ oder zusätzlich kann vorgesehen sein, dass zwischen dem Gegenstützelement und einem der zwei parallelen Endabschnitte des Gegenklemmelements zumindest ein erstes zusätzliches Gegenstützelement und zwischen dem Gegenstützelement und dem anderen der zwei parallelen Endabschnitte des Gegenklemmelements zumindest ein zweites zusätzliches Gegenstützelement angebracht, vorzugsweise angeschweißt, oder einteilig angeformt ist.

Vorzugsweise ist das Stützelement mittig zwischen den zwei parallelen Endabschnitten des Klemmelements angeordnet und befindet sich - entlang der Mastlängsrichtung in Richtung Montagebasis gesehen - zumindest abschnittsweise unterhalb des Mastfußes.

In entsprechender Weise wird es als vorteilhaft angesehen, wenn das Gegenstützelement mittig zwischen den zwei parallelen Endabschnitten des Gegenklemmelements angeordnet ist und sich
- entlang der Mastlängsrichtung in Richtung Montagebasis gesehen - zumindest abschnittsweise unterhalb des Mastfußes befindet.

Bezüglich der Anordnung des Stützelements, des Gegenstützelements, der zusätzlichen Stützelemente (so vorhanden), der zusätzlichen Gegenstützelemente (so vorhanden) und der Endabschnitte wird es als vorteilhaft angesehen, wenn
- sich das Stützelement und das Gegenstützelement unmittelbar gegenüberliegen bzw. miteinander fluchten,
- sich das zumindest eine erste zusätzliche Stützelement (so vorhanden) und das zumindest eine erste zusätzliche Gegenstützelement (so vorhanden) unmittelbar gegenüberliegen bzw. miteinander fluchten,
- sich das zumindest eine zweite zusätzliche Stützelement (so vorhanden) und das zumindest eine zweite zusätzliche Gegenstützelement (so vorhanden) unmittelbar gegenüberliegen bzw. miteinander fluchten,
- sich einer der zwei parallelen Endabschnitte des Klemmelements und einer der zwei parallelen Endabschnitte des Gegenklemmelements unmittelbar gegenüberliegen bzw. miteinander fluchten und/oder
- sich der andere der zwei parallelen Endabschnitte des Klemmelements und der andere der zwei parallelen Endabschnitte des Gegenklemmelements unmittelbar gegenüberliegen bzw. miteinander fluchten.

Die Anordnung des Stützelements, der zwei zusätzlichen Stützelemente sowie der zwei parallelen Endabschnitte des Klemmelements ist vorzugsweise äquidistant zum jeweiligen Nachbarn.

Die Anordnung des Gegenstützelements, der zwei zusätzlichen Gegenstützelemente sowie der zwei parallelen Endabschnitte des Gegenklemmelements ist vorzugsweise äquidistant zum jeweiligen Nachbarn.

Vorzugsweise ist jeweils mindestens eine Schraubverbindung zwischen den Endabschnitten und den zusätzlichen Stütz- bzw. Gegenstützelementen und jeweils mindestens eine Schraubverbindung zwischen den zusätzlichen Stütz- bzw.- Gegenstützelementen und dem dazwischen liegenden Stütz- bzw.- Gegenstützelement angeordnet.

Das Klemmelement und das Gegenklemmelement sind vorzugsweise baugleich; alternativ kann im Gegenklemmelement auch das Durchgangsloch fehlen, so dass das Klemmelement und das Gegenklemmelement mit der Ausnahme des Durchgangslochs im Klemmelement baugleich sind.

Als besonders vorteilhaft wird es auch angesehen, wenn der Innendurchmesser des Außenrohres der Montagebasis und der Außendurchmesser des Innenelements der Montagebasis derart aufeinander abgestimmt sind, dass das Innenelement im Außenrohr spielfrei, zumindest weitgehend spielfrei, beweglich ist und dass beim Verklemmen der Montagebasis zwischen dem Klemmelement und dem Gegenklemmelement durch ein Verformen des Außenrohres das Innenelement und das Außenrohr derart miteinander verklemmt werden, dass sie relativ zueinander fixiert werden. Vorzugsweise weisen das Stützelement und das Gegenstützelement einen oder mehrere Vorsprünge auf, die bei einem Verklemmen der Montagebasis zwischen dem Klemmelement und dem Gegenklemmelement in die Montagebasis hineingedrückt werden. Die Vorsprünge sind bevorzugt im Bereich einer Aussparung des Stützelements bzw. des Gegenstützelements angeordnet, die auf dem Außenrohr der Montagebasis aufliegt.

Sind zusätzliche Stützelemente und/oder zusätzliche Gegenstützelemente vorhanden, so ist es vorteilhaft, wenn diese jeweils einen oder mehrere Vorsprünge aufweisen, die bei einem Verklemmen der Montagebasis zwischen dem Klemmelement und dem Gegenklemmelement in die Montagebasis hineingedrückt werden. Die Vorsprünge sind bevorzugt im Bereich einer Aussparung des jeweiligen zusätzlichen Stützelements bzw. des jeweiligen zusätzlichen Gegenstützelements angeordnet, die auf dem Außenrohr der Montagebasis aufliegt.

Auch sind an den parallelen Endabschnitten des Klemmelements und des Gegenklemmelements bevorzugt ein oder mehrere Vorsprünge vorhanden, die bei einem Verklemmen der Montagebasis zwischen dem Klemmelement und dem Gegenklemmelement in die Montagebasis hineingedrückt werden. Die Vorsprünge sind bevorzugt im Bereich einer Aussparung des Klemmelements bzw. des Gegenklemmelements angeordnet, die auf dem Außenrohr der Montagebasis aufliegt.

Die Vorsprünge des Stützelements, die Vorsprünge des Gegenstützelements, die Vorsprünge der parallelen Endabschnitte des Klemmelements und/oder die Vorsprünge der parallelen Endabschnitte des Gegenklemmelements werden vorzugsweise bei einem Verklemmen der Montagebasis zwischen dem Klemmelement und dem Gegenklemmelement derart in das Außenrohr hineingedrückt, dass sie das Außenrohr und das Innenelement zumindest auch unterhalb des Mastfußes miteinander verklemmen.

Die Vorsprünge des Stützelements und die des Gegenstützelements werden bei einem Verklemmen der Montagebasis zwischen dem Klemmelement und dem Gegenklemmelement bevorzugt derart auf gegenüberliegenden Rohrseiten in das Außenrohr hineingedrückt, dass sie das Außenrohr und das Innenelement unterhalb des Mastfußes auf gegenüberliegenden Rohrseiten miteinander verklemmen; zu diesem Zweck sind die Vorsprünge des Stützelements und die des Gegenstützelements - entlang der Längsrichtung des Antennenmasts gesehen - vorzugsweise fluchtend angeordnet.

Die Montagebasis weist an ihren Enden zur Montage an benachbarten Dachsparren vorzugsweise jeweils ein Halteelement auf, wobei eines der Halteelemente an dem dem Antennenmast abgewandten Ende des Außenrohres und das andere Halteelement an dem dem Antennenmast abgewandten Ende des Innenelements angebracht ist.

Die Halteelemente sind vorzugsweise Winkelteile, die jeweils einen Auflageabschnitt zur Auflage auf dem zugeordneten Dachsparren und jeweils einen Anlageabschnitt zur seitlichen Anlage an dem zugeordneten Dachsparren aufweisen. Der Auflageabschnitt und der Anlageabschnitt sind bevorzugt durch eine Biegekante getrennt. Die Mittenachse des Außenrohres und die des Innenelements (z. B. Innenrohres) weist zu dem Auflageabschnitt bzw. der Biegekante vorzugsweise einen Abstand auf, der zwischen dem 0,3-fachen und dem 1,5-fachen, besonders bevorzugt zwischen dem 0,5-fachen und dem 1,0-fachen, der Tiefe des Klemmelements liegt; die "Tiefe" ist dabei entlang derjenigen Richtung zu sehen, die senkrecht zur Längsrichtung des Außenrohres oder Innenelements der Montagebasis und senkrecht zur Längsrichtung des Antennenmastes liegt.

Der Anlageabschnitt des Winkelteils, an dem das Innenrohr angebracht ist, weist vorzugsweise mindestens ein, vorzugsweise zwei Löcher auf, die innerhalb der Innenkontur des Innenrohres an der Schnittstelle zu dem Anlageabschnitt liegen. Der Anlageabschnitt des Winkelteils, an dem das Außenrohr angebracht ist, weist vorzugsweise mindestens ein, vorzugsweise zwei Löcher auf, die innerhalb der Innenkontur des Außenrohres an der Schnittstelle zu dem Anlageabschnitt liegen.

Das Klemmelement und das Gegenklemmelement sind bevorzugt miteinander durch zumindest eine Schraubverbindung verbindbar. Eine solche Schraubverbindung kann beispielsweise Schrauben, Gewindestangen, Bolzen mit Gewindeabschnitten, Rundbolzen mit Gewindestangen oder dergleichen umfassen.

Zusätzlich oder alternativ können das Klemmelement und das Gegenklemmelement durch ein Schwenkgelenk verbunden sein und durch ein Verschwenken (und ggf. ein zusätzliches Verschrauben) verklemmt werden.

Der Querschnitt des Außenelements bzw. des Außenrohres und der Querschnitt des Innenelements, also der Stange oder des Innenrohres sind beliebig; der Querschnitt kann rund, eckig, oval oder anders geformt sein. Ein kreisrunder Querschnitt wird jedoch als vorteilhaft angesehen.

Die Erfindung bezieht sich außerdem auf einen Antennenhalter mit einer Montagebasis, einem Antennenmast und Haltemitteln zur Befestigung des Antennenmastes an der Montagebasis, wobei die Montagebasis wenigstens zwei ineinandergreifende Schiebeelemente, und zwar ein Außenelement, das durch ein Außenrohr gebildet ist, und ein Innenelement, das durch ein in das Außenrohr eingreifendes Innenrohr oder eine in das Außenrohr eingreifende Stange gebildet ist, umfasst, wobei die Haltemittel ein Klemmelement und ein Gegenklemmelement aufweisen, die derart miteinander verbindbar sind, dass das Klemmelement und das Gegenklemmelement einen Abschnitt der Montagebasis einklemmen, und wobei der Mastfuß an dem Klemmelement angebracht ist, dadurch gekennzeichnet, dass die Montagebasis an ihren Enden zur Montage an benachbarten Dachsparren jeweils ein Halteelement aufweist, wobei eines der Halteelemente an dem dem Antennenmast abgewandten Ende des Außenrohres und das andere Halteelement an dem dem Antennenmast abgewandten Ende des Innenelements angebracht ist, wobei die Halteelemente Winkelteile sind, die jeweils einen Auflageabschnitt zur Auflage auf dem zugeordneten Dachsparren und jeweils einen Anlageabschnitt zur seitlichen Anlage an dem zugeordneten Dachsparren aufweisen.

Als vorteilhaft wird es angesehen, wenn der Auflageabschnitt und der Anlageabschnitt durch eine Biegekante getrennt sind und die Mittenachse des Außenrohres und/oder die des Innenelements zu dem Auflageabschnitt einen Abstand aufweist, der zwischen dem 0,3-fachen und dem 1,5-fachen, besonders bevorzugt zwischen dem 0,5-fachen und dem 1,0-fachen, der Tiefe des Klemmelements liegt, wobei die Tiefe entlang derjenigen Richtung gesehen wird, die senkrecht zur Längsrichtung des Außenrohres der Montagebasis und senkrecht zur Längsrichtung des Antennenmastes liegt. Im Falle einer solchen Dimensionierung wird eine optimale Platzierung des Antennenhalters im Dachraum unterhalb der Dachziegel erreicht.

Auch ist es vorteilhaft, wenn der Anlageabschnitt des Winkelteils, an dem das Innenrohr angebracht ist, mindestens ein, vorzugsweise zwei Löcher aufweist, die innerhalb der Innenkontur des Innenrohres an der Schnittstelle zu dem Anlageabschnitt liegen, und/oder der Anlageabschnitt des Winkelteils, an dem das Außenrohr angebracht ist, mindestens ein, vorzugsweise zwei Löcher aufweist, die innerhalb der Innenkontur des Außenrohres an der Schnittstelle zu dem Anlageabschnitt liegen.

Die Erfindung wird nachfolgend anhand von Ausführungsbeispielen näher erläutert; dabei zeigen beispielhaft:
- Figur 1: ein Ausführungsbeispiel für einen erfindungsgemäßen Antennenhalter nach einer Montage auf zwei benachbarten Dachsparren,
- Figur 2: den Antennenhalter gemäß Figur 1 in einer anderen Sicht schräg von der Seite,
- Figur 3: ein Ausführungsbeispiel für ein Klemmelement für den Antennenhalter gemäß Figur 1 in einer dreidimensionalen Sicht schräg von der Seite,
- Figur 4: das Klemmelement gemäß Figur 3 in einer Draufsicht,
- Figur 5: das Klemmelement gemäß den Figuren 3 und 4 in einer Sicht von der Seite, und zwar in einer Sicht senkrecht zur Längsrichtung der Montagebasis,
- Figur 6: das Klemmelement gemäß den Figuren 3 bis 5 in einer Sicht von vorn, und zwar in einer Sicht entlang der Längsrichtung der Montagebasis gemäß Figur 1,
- Figur 7: ein Ausführungsbeispiel für ein Winkelteil für den Antennenhalter gemäß Figur 1 in einer seitlichen Sicht,
- Figur 8: das Winkelteil gemäß Figur 7 in der Draufsicht,
- Figur 9: ein weiteres Ausführungsbeispiel für ein Gegenklemmelement, das bei dem Antennenhalter gemäß den Figuren 1 und 2 sowie 10 eingesetzt und beispielsweise mit dem Klemmelement gemäß den Figuren 1-6 und 10 verbaut werden kann,
- Figur 10: ein weiteres Ausführungsbeispiel für einen erfindungsgemäßen Antennenhalter nach einer Montage auf zwei benachbarten Dachsparren,
- Figur 11: ein weiteres Ausführungsbeispiel für einen erfindungsgemäßen Antennenhalter zur Montage auf zwei benachbarten Dachsparren und
- Fig. 12-18: die Bestandteile des Antennenhalters gemäß Figur 11 näher im Detail.

In den Figuren werden der Übersicht halber für identische oder vergleichbare Komponenten stets dieselben Bezugszeichen verwendet.

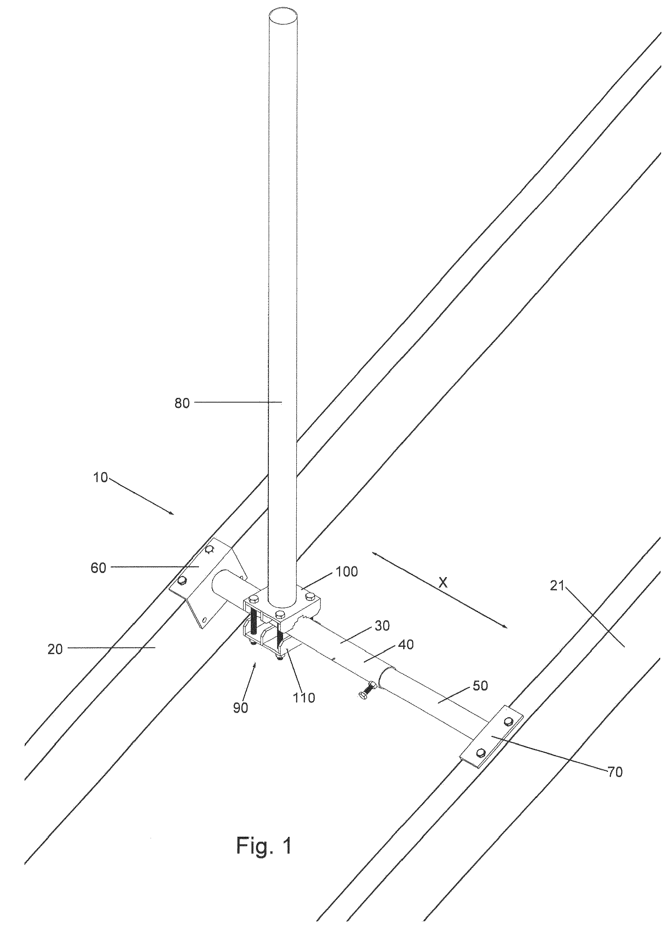

Die Figur 1 zeigt einen Antennenhalter 10, der auf zwei benachbarten parallelen Dachsparren 20 und 21 aufgeschraubt ist. Der Antennenhalter 10 weist eine Montagebasis 30 auf, die ein Außenrohr 40 und ein in dem Außenrohr 40 verschiebbar gehaltenes Innenrohr 50 umfasst. Durch Ineinanderschieben des Innenrohrs 50 und des Außenrohrs 40 lässt sich die Länge der Montagebasis 30 entlang der Längsrichtung X der Rohre 40 und 50 verändern, wodurch eine Anpassung des Antennenhalters 10 an unterschiedliche Dachsparrenabstände möglich ist.

Zur Befestigung der Montagebasis 30 an den beiden Dachsparren 20 und 21 sind Halteelemente in Form von Winkelteilen 60 und 70 vorhanden, die ein Aufschrauben des Antennenhalters 10 auf den Dachsparren 20 und 21 ermöglichen.

Zur Anbindung des Antennenmastes 80 an der Montagebasis 30 sind Haltemittel 90 vorgesehen, die ein oberes Klemmelement 100 und ein unteres Gegenklemmelement 110 umfassen. Das obere Klemmelement 100 ist mit dem unteren Gegenklemmelement 110 mittels Schraubverbindungen verbunden, die ein Einklemmen der Montagebasis 30 zwischen dem oberen Klemmelement 100 und dem unteren Klemmelement 110 durch Festschrauben ermöglichen.

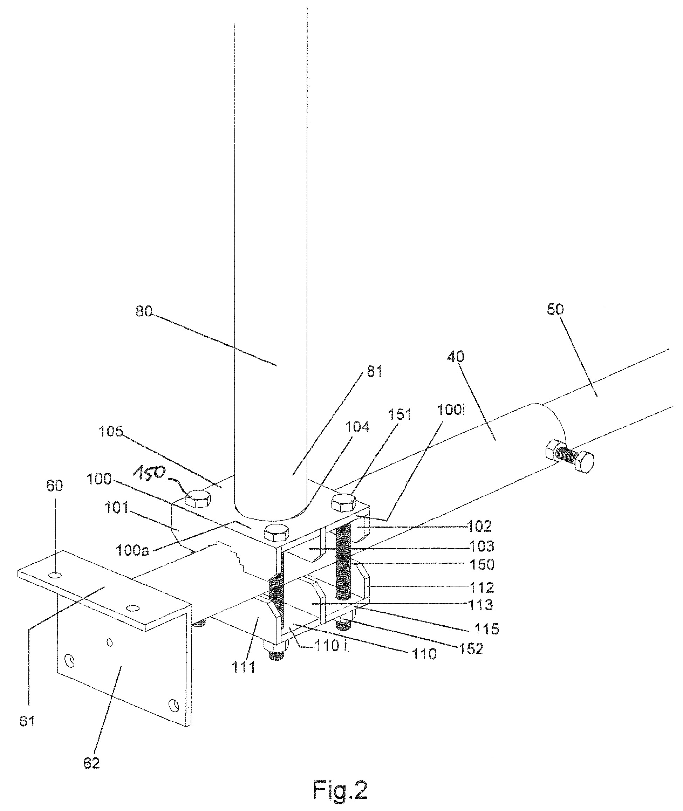

Die Figur 2 zeigt Bestandteile des Antennenhalters 10 gemäß Figur 1 in einer anderen Darstellung näher im Detail. Man erkennt, dass das Klemmelement 100 zwei parallele Endabschnitte 101 und 102 aufweist, die sich in einem Winkel (90° oder zumindest näherungsweise 90°) von der Innenseite 100i einer Trägerplatte 105 des Klemmelements 100 in Richtung auf das Außenrohr 40 der Montagebasis 30 erstrecken. Mittig zwischen den beiden parallelen Endabschnitten 101 und 102 befindet sich ein Stützelement 103, das durch eine Platte gebildet ist. Das Stützelement 103 bzw. die Platte erstreckt sich in einem rechten Winkel von der Innenseite 100i des Klemmelements 100 bzw. von der Innenseite der Trägerplatte 105 des Klemmelements 100 in Richtung des Außenrohrs 40 und stützt sich auf diesem ab.

Die Anordnung des Stützelements 103 ist derart gewählt, dass sich dieses unterhalb des Mastfußes 81 des Antennenmasts 80 befindet, so dass sich bei einem Anziehen von Schraubverbindungen 150, die das Klemmelement 100 mit dem Gegenklemmelement 110 verbinden, das Stützelement 103 unterhalb des Mastfußes 81 auf der Montagebasis abstützt und somit eine optimale Kraftübertragung zwischen dem Klemmelement 100 und der Montagebasis 30 im Bereich unterhalb des Mastfußes 81 erreicht wird.

Das Klemmelement 100 und das Stützelement 103 können Abschnitte eines einteiligen Bauteils, beispielsweise eines Gussteils oder eines Strangpressprofilteils sein. Alternativ kann das Stützelement 103 durch eine separate Platte gebildet sein, die an der Innenseite 100i des Klemmelements 100 bzw. der Innenseite der Trägerplatte 105 angebracht, insbesondere angeschweißt ist.

Die Schraubverbindungen 150 weisen bei dem Ausführungsbeispiel gemäß Figur 2 Schrauben 151 und Muttern 152 auf; alternativ sind auch andere Arten von Schraubverbindungen möglich, beispielsweise auf der Basis von Gewindestangen oder dergleichen. Darüber hinaus können das Klemmelement 100 und das Gegenklemmelement 110 auch mittels weiterer Komponenten miteinander in Verbindung stehen, beispielsweise mittels eines Schwenkgelenks, das ein Verschwenken zwischen dem Klemmelement 100 und dem Gegenklemmelement 110 beim Anbringen der beiden Elemente an der Montagebasis 30 ermöglicht.

Die Figur 2 zeigt darüber hinaus die Ausgestaltung des Gegenklemmelements 110 beispielhaft näher im Detail. Man erkennt zwei parallele Endabschnitte 111 und 112, die sich von der Innenseite 110i des Gegenklemmelements 110, und zwar von der Innenseite einer Trägerplatte 115 des Gegenklemmelements 110 in einem rechten Winkel in Richtung Montagebasis 30 erstrecken und sich auf dieser abstützen. Zwischen den beiden parallelen Endabschnitten 111 und 112 ist ein Gegenstützelement 113 angeordnet, das durch eine Platte gebildet ist. Die Platte bzw. das Gegenstützelement 113 erstreckt sich senkrecht von der Innenseite 110i des Gegenklemmelements 110 bzw. von der Innenseite einer Trägerplatte 115 des Gegenklemmelements 110 in Richtung der Montagebasis 30 und stützt sich auf dieser ab.

Das Gegenstützelement 113 und das Stützelement 103 liegen einander gegenüber und fluchten in Längsrichtung des Antennenmasts 80 gesehen, so dass bei einem Anziehen der Schraubverbindungen 150 das Stützelement 103 und das Gegenstützelement 113 lokal eine sehr hohe Anpresskraft auf gegenüberliegenden Seiten unterhalb des Mastfußes 81 auf die Montagebasis 30 ausüben. Aufgrund der Anordnung des Stützelements 103 und des Gegenstützelements 113 unterhalb des Mastfußes 81 wird durch das Stützelement 103 und das Gegenstützelement 113 eine besonders hohe Verdrehfestigkeit des Antennenmastes 80 relativ zur Montagebasis 30 erreicht. Darüber hinaus gewährleisten das Stützelement 103 und das Gegenstützelement 113, dass es zu keinem Durchbiegen oder Durchwölben des Klemmelements 100 und des Gegenklemmelements 110 bzw. der Trägerplatten 105 und 115 beim Anziehen der Schraubverbindungen 150 im Bereich des Mastfußes 81 kommt.

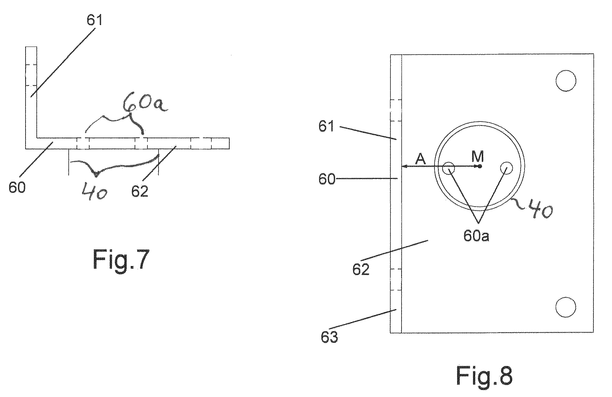

Die Figur 2 zeigt darüber hinaus die Ausgestaltung des Winkelteils 60 näher im Detail. Man erkennt einen Auflageabschnitt 61, der zur Auflage des Winkelteils 60 auf dem Dachsparren 20 dient, und einen Anlageabschnitt 62, der seitlich an dem Dachsparren 20 gemäß Figur 1 anliegt. Zum Anschrauben des Auflageabschnitts 61 und des Anlageabschnitts 62 sind Bohrungen vorhanden, durch die Schrauben hindurchgeführt werden können. Die Anbindung der Montagebasis 30 bzw. des Außenrohrs 40 an dem Winkelteil 60 wird weiter unten im Zusammenhang mit den Figuren 7 und 8 näher im Detail erläutert.

Das Winkelteil 70 gemäß Figur 1 kann von seinem Aufbau her dem Winkelteil 60 gemäß Figur 2 entsprechen bzw. mit diesem identisch sein.

In der Figur 2 ist darüber hinaus ersichtlich, dass sich das Stützelement 103 und das Gegenstützelement 113 unmittelbar gegenüberliegen, sich einer der zwei parallelen Endabschnitte 101 des Klemmelements 100 und einer der zwei parallelen Endabschnitte 111 des Gegenklemmelements 110 unmittelbar gegenüberliegen und sich der andere der zwei parallelen Endabschnitte 102 des Klemmelements 100 und der andere der zwei parallelen Endabschnitte 112 des Gegenklemmelements 110 unmittelbar gegenüberliegen.

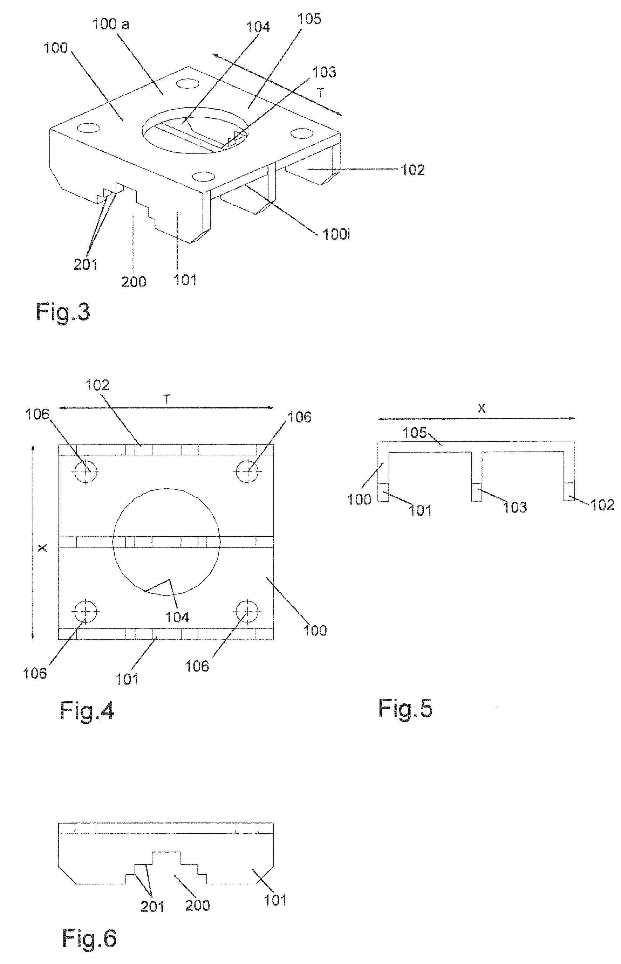

Die Figur 3 zeigt das Klemmelement 100 gemäß Figur 2 näher im Detail. Man erkennt die beiden parallelen Endabschnitte 101 und 102 sowie das zwischen den beiden Endabschnitten angeordnete Stützelement 103.

Zur Anbindung des Mastfußes 81 des Antennenmasts 80 (vgl. Figur 2) weist das Klemmelement 100 ein Durchgangsloch 104 auf, das ein Durchschieben des Mastfußes 81 durch die obere Trägerplatte 105 des Klemmelements 100 ermöglicht. Zur Montage des Antennenmastes 80 wird der Mastfuß 81 durch das Durchgangsloch 104 hindurchgeschoben, bis er auf das unter dem Durchgangsloch 104 befindliche Stützelement 103 stößt. Anschließend wird der Mastfuß 81 in dieser Position befestigt, beispielsweise verschweißt.

Als besonders vorteilhaft wird es angesehen, wenn der Mastfuß 81 sowohl auf der Außenseite 100a des Klemmelements 100 als auch auf der Innenseite 100i des Klemmelements 100 befestigt, insbesondere verschweißt ist. Außerdem wird der Mastfuß 81 vorzugsweise auch mit dem Stützelement 103 verbunden, beispielsweise verschweißt. Mit anderen Worten ist es also möglich, den Mastfuß 81 an drei Schnittstellen anzubinden, nämlich auf der Außenseite 100a, der Innenseite 100i sowie dem Stützelement 103.

Die Figur 3 zeigt darüber hinaus die Ausgestaltung des parallelen Endabschnitts 101 näher im Detail. Man erkennt eine Aussparung 200, die Vorsprünge 201, beispielsweise zackenförmige Vorsprünge, aufweist. Die Vorsprünge 201 werden durch die Stufenförmigkeit der Aussparung 200 gebildet.

Wird der Endabschnitt 101 auf die Montagebasis 30 aufgesetzt, so liegen die Vorsprünge 201 auf der Montagebasis auf, so dass es bei einem Anziehen der Schraubverbindungen 150 gemäß Figur 2 zu einem Einpressen der Vorsprünge 201 in die Montagebasis kommt. Durch das Eindrücken der Vorsprünge 201 in das Außenrohr 40 der Montagebasis 30 kommt es zu einer formschlüssigen Verbindung und darüber hinaus vorzugsweise zu einem Verklemmen zwischen dem Außenrohr 40 und dem darin befindlichen Innenrohr 50, sobald nämlich die Vorsprünge 201 das Material des Außenrohres 40 derart deformieren, dass dieses auf das Innenrohr 50 gepresst wird.

Das Stützelement 103 sowie der parallele Endabschnitt 102 sind mit entsprechenden Aussparungen bzw. Ausnehmungen 200 sowie entsprechenden Vorsprüngen 201 versehen, so dass auch das Stützelement 103 sowie der Endabschnitt 102 ein Verklemmen zwischen dem Außenrohr 40 und dem Innenrohr 50 bei einem Anziehen der Schraubverbindungen 150 gemäß Figur 2 bewirken können. Die Aussparungen und Vorsprünge im Stützelement 103 und im parallelen Endabschnitt 102 fluchten vorzugsweise mit denen des Endabschnitts 101 in Längsrichtung X der Montagebasis 30 gesehen (vgl. Fig. 1).

Die Figur 4 zeigt das Klemmelement 100 mit dem Stützelement 103 gemäß Figur 3 näher in einer Draufsicht. Man erkennt das Durchgangsloch 104, durch das der Mastfuß 81 hindurch in Richtung auf das unter dem Durchgangsloch 104 befindliche Stützelement 103 geschoben werden kann. Darüber hinaus sind Bohrungen 106 erkennbar, durch die die in Figur 2 gezeigten Schrauben 151 der Schraubverbindungen 150 hindurchgeführt werden können.

Die Figur 5 zeigt das Klemmelement 100 mit dem Stützelement 103 in einer Sicht von der Seite. Es lässt sich erkennen, dass das Stützelement 103 mittig zwischen den beiden parallelen Endabschnitten 101 und 102 des Klemmelements 100 angeordnet ist.

Die Figur 6 zeigt das Klemmelement 100 mit dem daran angebrachten Stützelement 103 in einer Sicht von vorn, gesehen entlang der Längsrichtung X der Montagebasis 30 (vgl. Figur 1). Es lässt sich erkennen, dass die stufenförmige Aussparung 200 sowie die Vorsprünge 201 des Endabschnitts 101 mit denen des Endabschnitts 102 und des Stützelements 103 fluchten. Wird bei der Montage die Aussparung 200 auf die Montagebasis 30 aufgesetzt, so werden bei einem Anziehen der Schraubverbindungen 150 gemäß Figur 2 die Vorsprünge 201 der beiden Endabschnitte 101 und 102 sowie die Vorsprünge 201 des Stützelements 103 in die Montagebasis 30 eindrücken und zu einer Deformation des Außenrohrs 40 und zu einem Verklemmen des Außenrohrs 40 mit dem darin befindlichen Innenrohr 50 führen. Um dieses Verklemmen zu gewährleisten, ist die Länge des Innenrohres 50 derart gewählt, dass sich dieses bis unterhalb der Haltemittel 90 (vgl. Figur 1) in das Außenrohr 40 hineinerstreckt. Das Klemmelement 100 und das Gegenklemmelement 110 sind vorzugsweise auf dem Außenrohr 40 aufgesetzt.

Die Figur 7 zeigt ein Ausführungsbeispiel für das Winkelteil 60 gemäß Figur 2. Man erkennt den Auflageabschnitt 61 sowie den Anlageabschnitt 62 in einer Sicht von der Seite.

Die Figur 8 zeigt das Winkelteil 60 gemäß Figur 7 in einer Draufsicht, nachdem das Außenrohr 40 der Montagebasis 30 gemäß Figur 2 angebracht worden ist. Es lässt sich erkennen, dass das Winkelteil 60 im Schnittstellenbereich zu dem Außenrohr 40 mit zwei Löchern 60a versehen ist, die innerhalb der Innenkontur des Außenrohrs 40 liegen. Die Funktion der Löcher 60a besteht darin, eine Feuerverzinkung des Außenrohrs 40 nach einem Anschweißen des Winkelteils 60 an dem Außenrohr 40 zu vereinfachen.

Auch lässt sich erkennen, dass der Auflageabschnitt 61 und der Anlageabschnitt 62 durch eine Biegekante 63 getrennt sind. Die Mittenachse M des an dem Winkelteil 60 angebrachten Außenrohres 40 weist einen Abstand A zu dem Auflageabschnitt 61 und der Biegekante 63 auf, der zwischen dem 0,3-fachen und dem 1,5-fachen, besonders bevorzugt zwischen dem 0,5-fachen und dem 1,0-fachen, der Tiefe T des Klemmelements (vgl. Figur 3 und 4) liegt, wobei die Tiefe T entlang derjenigen Richtung gesehen wird, die senkrecht zur Längsrichtung des Außenrohres 40 der Montagebasis und senkrecht zur Längsrichtung des Antennenmastes 80 liegt. Im Falle einer solchen Dimensionierung wird eine optimale Platzierung des Antennenhalters im Dachraum unterhalb der Dachziegel erreicht.

Das Winkelteil 70 gemäß Figur 1 ist vorzugsweise mit dem Winkelteil 60 identisch. Auch das Winkelteil 70 weist somit vorzugsweise zwei Löcher auf, die innerhalb der Innenkontur des daran angebrachten Innenrohrs 50 liegen. Bei dem Winkelteil 70 ist vorzugsweise vorgesehen, dass die Mittenachse des an dem Winkelteil 70 angebrachten Innenrohres 50 einen Abstand zu dem Auflageabschnitt und der Biegekante aufweist, der zwischen dem 0,3-fachen und dem 1,5-fachen, besonders bevorzugt zwischen dem 0,5-fachen und dem 1,0-fachen, der Tiefe T des Klemmelements (vgl. Figur 3 und 4) liegt.

Das Gegenklemmelement 110 gemäß Figur 2 ist vorzugsweise mit dem Klemmelement 100 gemäß den Figuren 3 bis 6 baugleich mit dem einzigen Unterschied, dass bei dem Gegenklemmelement 110 das Durchgangsloch 104, das bei dem Klemmelement 100 für den Mastfuß 81 vorgesehen ist, fehlen kann.

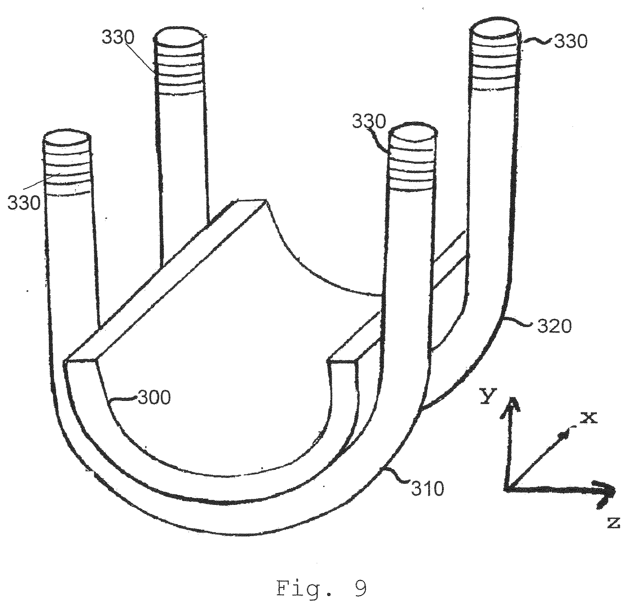

Eine alternative Ausgestaltung für das Gegenklemmelement 110 ist in der Figur 9 dargestellt. Man erkennt ein Rinnenteil (rinnenförmiges Teil) 300, das zur Auflage auf der Unterseite des Außenrohrs 40 der Montagebasis 30 gemäß Figur 2 bestimmt ist. Das Rinnenteil 300 wird von Fixierelementen 310 und 320 gehalten. Die Fixierelemente 310 und 320 sind durch U-förmig gebogene Stangen gebildet, die an ihren Enden jeweils mit einem Gewinde 330 versehen sind.

Durch ein Verschrauben mit einem Klemmelement, beispielsweise dem Klemmelement 100 gemäß den Figuren 1 und 2, wird das Rinnenteil 300 in Richtung auf die Unterseite der Montagebasis 30 gezogen, wodurch es zu einem Einklemmen der Montagebasis 30 kommt.

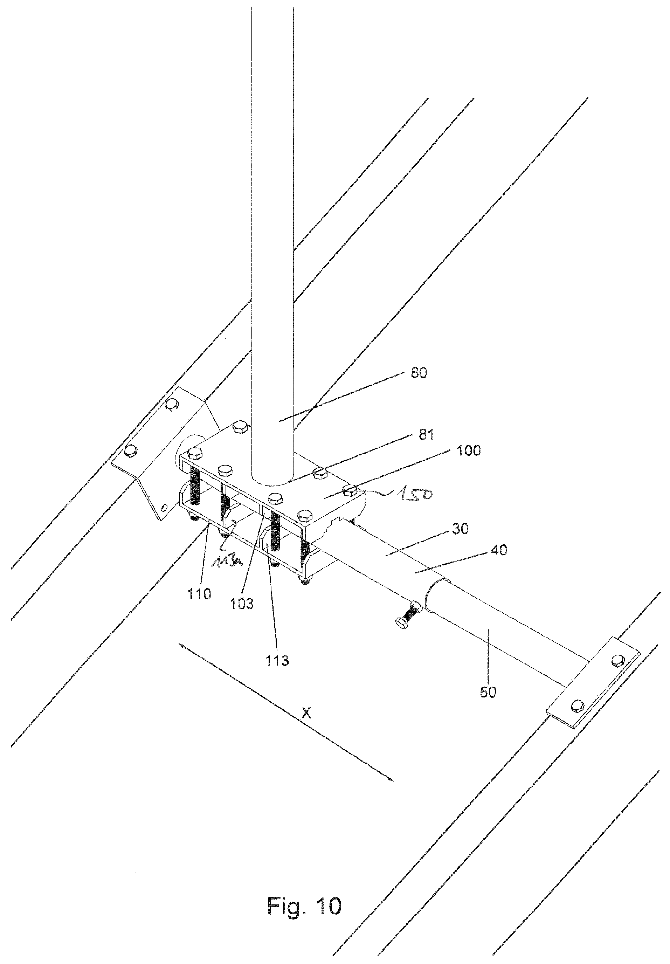

Die Figur 10 zeigt ein weiteres Ausführungsbeispiel für einen Antennenhalter 10, der ein Klemmelement 100 und ein Gegenklemmelement 110 aufweist. Im Unterschied zu dem Ausführungsbeispiel gemäß den Figuren 1 bis 8 sind zwei Stützelemente und zwei Gegenstützelemente 113 und 113a nicht unmittelbar unter dem Mastfuß 81 angeordnet, sondern in Längsrichtung X der Montagebasis 30 bzw. des Außenrohres 40 versetzt. Außerdem ist die Anzahl der Schraubverbindungen 150 größer; sie beträgt hier acht statt beispielsweise vier. Übrigen gelten die obigen Ausführungen entsprechend.

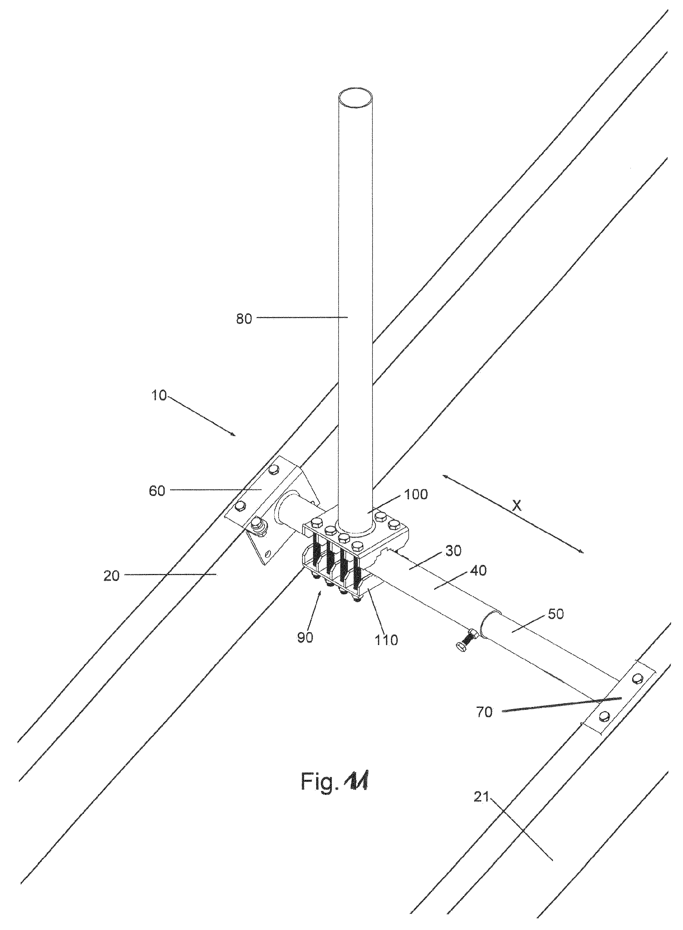

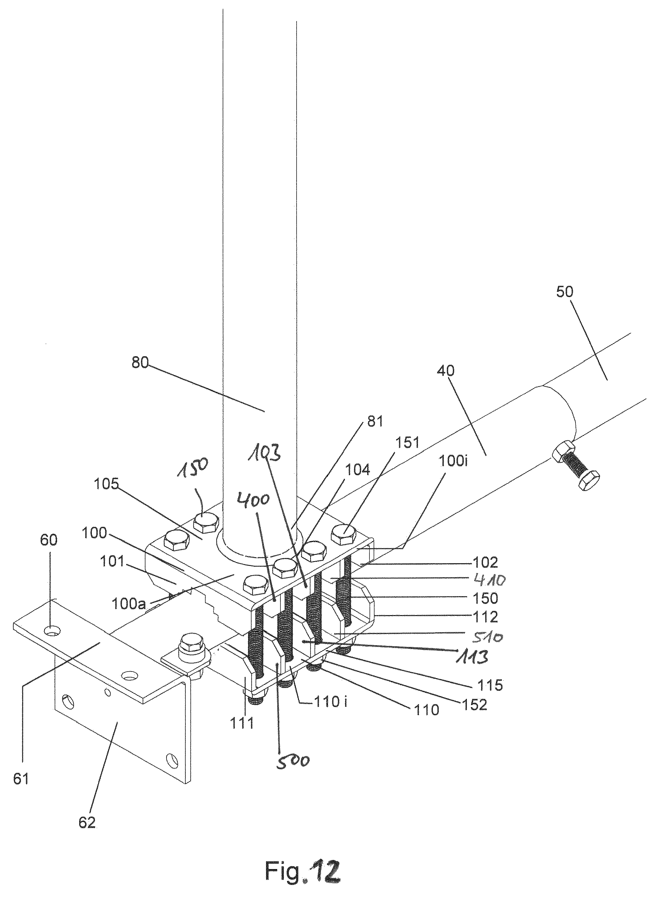

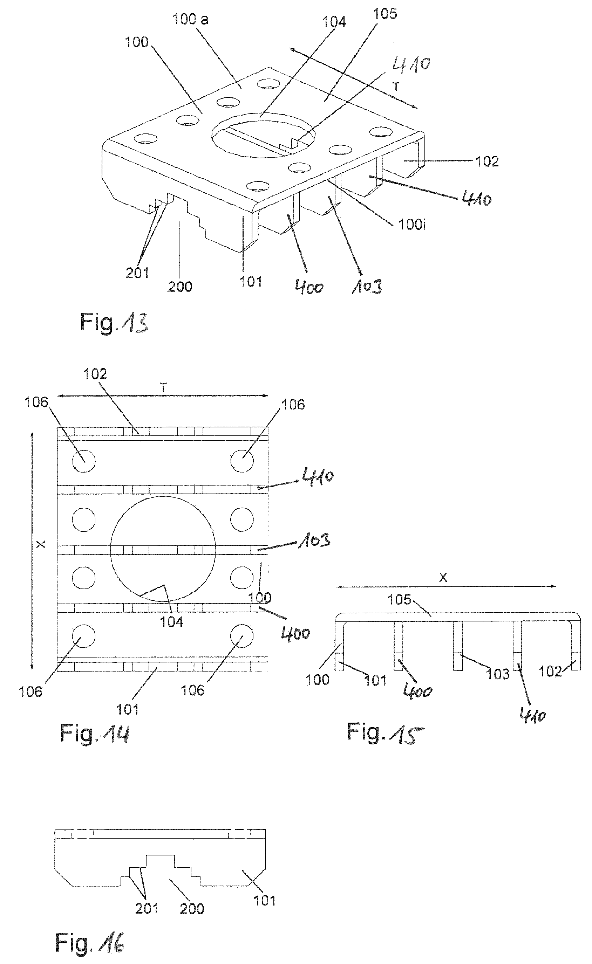

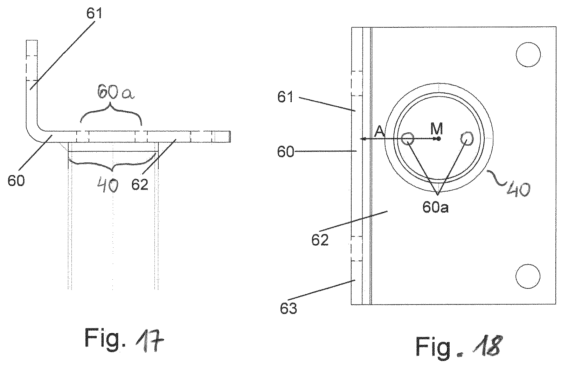

Die Figuren 11-18 zeigen ein weiteres Ausführungsbeispiel für einen Antennenhalter 10, der ein Klemmelement 100 und ein Gegenklemmelement 110 aufweist. Im Unterschied zu dem Ausführungsbeispiel gemäß den Figuren 1 bis 8 ist zwischen einem mittig und unter dem Mast angeordneten Stützelement 103 und dem Endabschnitt 101 des Klemmelements 100 ein erstes zusätzliches Stützelement 400 und zwischen dem mittigen Stützelement 103 und dem anderen Endabschnitt 102 des Klemmelements 100 ein zweites zusätzliches Stützelement 410 angebracht, vorzugsweise angeschweißt, oder angeformt.

Zwischen dem mittig angeordneten Gegenstützelement 113 und dem Endabschnitt 111 des Gegenklemmelements 110 befindet sich ein erstes zusätzliches Gegenstützelement 500 und zwischen dem Gegenstützelement 113 und dem anderen Endabschnitt 112 des Gegenklemmelements 110 ein zweites zusätzliches Gegenstützelement 510.

Das Stützelement 103 ist mittig zwischen den zwei parallelen Endabschnitten 101 und 102 des Klemmelements 100 angeordnet und befindet sich - entlang der Mastlängsrichtung in Richtung Montagebasis 30 gesehen - zumindest abschnittsweise unterhalb des Mastfußes 81.

Das Gegenstützelement 113 ist mittig zwischen den zwei parallelen Endabschnitten 111 und 112 des Gegenklemmelements 110 angeordnet und befindet sich - entlang der Mastlängsrichtung in Richtung Montagebasis 30 gesehen - zumindest abschnittsweise unterhalb des Mastfußes 81.

Die Anordnung des Stützelements 103, der zwei zusätzlichen Stützelemente 400 und 410 sowie der zwei parallelen Endabschnitte 101 und 102 des Klemmelements 100 ist vorzugsweise äquidistant zum jeweiligen Nachbarn: Mit anderen Worten ist der Abstand zwischen dem Endabschnitt 101 und dem ersten zusätzlichen Stützelement 400 vorzugsweise genauso groß wie der Abstand zwischen dem Endabschnitt 102 und dem zweiten zusätzlichen Stützelement 410, genauso groß wie der Abstand zwischen dem ersten zusätzlichen Stützelement 400 und dem mittleren Stützelement 103 und/oder genauso groß wie der Abstand zwischen dem zweiten zusätzlichen Stützelement 410 und dem mittleren Stützelement 103.

Die Anordnung des Gegenstützelements 113, der zwei zusätzlichen Gegenstützelemente 500 und 510 sowie der zwei parallelen Endabschnitte 111 und 112 des Gegenklemmelements 110 ist vorzugsweise äquidistant zum jeweiligen Nachbarn: Mit anderen Worten ist der Abstand zwischen dem Endabschnitt 111 und dem ersten zusätzlichen Gegenstützelement 500 vorzugsweise genauso groß wie der Abstand zwischen dem Endabschnitt 112 und dem zweiten zusätzlichen Gegenstützelement 510, genauso groß wie der Abstand zwischen dem ersten zusätzlichen Gegenstützelement 500 und dem mittleren Gegenstützelement 113 und/oder genauso groß wie der Abstand zwischen dem zweiten zusätzlichen Gegenstützelement 510 und dem mittleren Gegenstützelement 113.

Vorzugsweise fluchten die Stütz- und Gegenstützelemente sowie die Endabschnitte paarweise: Es ist also mit anderen Worten vorteilhaft, wenn
- sich das mittlere Stützelement 103 und das mittlere Gegenstützelement 113 unmittelbar gegenüberliegen,
- sich das erste zusätzliche Stützelement 400 und das erste zusätzliche Gegenstützelement 500 unmittelbar gegenüberliegen,
- sich das zweite zusätzliche Stützelement 410 und das zweite zusätzliche Gegenstützelement 510 unmittelbar gegenüberliegen,
- sich der Endabschnitt 101 des Klemmelements 100 und der Endabschnitt 111 des Gegenklemmelements 110 unmittelbar gegenüberliegen und
- sich der Endabschnitt 102 des Klemmelements 100 und der Endabschnitte 112 des Gegenklemmelements 110 unmittelbar gegenüberliegen.

Die Anzahl der Schraubverbindungen 150 beträgt vorzugsweise acht; die Schraubverbindungen 150 liegen vorzugsweise mittig zwischen den Endabschnitten und den zusätzliche Stütz- bzw. Gegenstützelementen und mittig zwischen den zusätzlichen Stütz- bzw.- Gegenstützelementen und den mittleren Stütz- bzw.- Gegenstützelementen 103 und 113.

Im Übrigen gelten die obigen Ausführungen im Zusammenhang mit den Figuren 1 bis 10 entsprechend.

### Bezugszeichenliste

- 10: Antennenhalter
- 20: Dachsparren
- 21: Dachsparren
- 30: Montagebasis
- 40: Außenrohr
- 50: Innenrohr
- 60: Winkelteil
- 60a: Löcher
- 61: Auflageabschnitt
- 62: Anlageabschnitt
- 63: Biegekante
- 70: Winkelteil
- 80: Antennenmast
- 81: Mastfuß
- 90: Haltemittel
- 100: oberes Klemmelement
- 100a: Außenseite
- 100i: Innenseite
- 101: Endabschnitt
- 102: Endabschnitt
- 103: Stützelement
- 104: Durchgangsloch
- 105: Trägerplatte
- 106: Bohrungen
- 110: unteres Gegenklemmelement
- 110i: Innenseite
- 111: Endabschnitt
- 112: Endabschnitt
- 113: Gegenstützelement
- 115: Trägerplatte
- 150: Schraubverbindung
- 151: Schraube
- 152: Mutter
- 200: Aussparung
- 201: Vorsprung
- 300: Rinnenteil
- 310: Fixierelement
- 320: Fixierelement
- 330: Gewinde
- 400: zusätzliches Stützelement
- 410: zusätzliches Stützelement
- 500: zusätzliches Gegenstützelement
- 510: zusätzliches Gegenstützelement
- A: Abstand
- M: Mittenachse
- T: Tiefe
- X: Längsrichtung

## Patentansprüche

1. Antennenhalter (10) mit einer Montagebasis (30), einem Antennenmast (80) und Haltemitteln (90) zur Befestigung des Antennenmastes (80) an der Montagebasis (30),
- wobei die Montagebasis (30) wenigstens zwei ineinandergreifende Schiebeelemente, und zwar ein Außenelement, das durch ein Außenrohr (40) gebildet ist, und ein Innenelement, das durch ein in das Außenrohr (40) eingreifendes Innenrohr (50) oder eine in das Außenrohr (40) eingreifende Stange gebildet ist, umfasst,
- wobei die Haltemittel (90) ein Klemmelement (100) und ein Gegenklemmelement (110) aufweisen, die derart miteinander verbindbar sind, dass das Klemmelement (100) und das Gegenklemmelement (110) einen Abschnitt der Montagebasis (30) einklemmen,
- wobei das Klemmelement (100) zwei parallele Endabschnitte (101,102) aufweist, die jeweils eine äußere Stützwand bilden und sich auf der Montagebasis (30) abstützen, und
- wobei der Mastfuß (81) an dem Klemmelement (100) angebracht ist,
**dadurch gekennzeichnet, dass**
- auf der Innenseite des Klemmelements (100) mindestens ein Stützelement (103) angeordnet ist, das sich in Richtung auf die Montagebasis (30) erstreckt und sich auf der Montagebasis (30) abstützt,
- das Klemmelement (100) im Bereich des Mastfußes (81) ein Durchgangsloch (104) aufweist, durch das der Mastfuß (81) hindurchgeführt ist, und
- der durch das Durchgangsloch (104) hindurch geführte Abschnitt des Mastfußes (81) auf dem mindestens einen Stützelement (103) aufliegt.

2. Antennenhalter (10) nach Anspruch 1,
**dadurch gekennzeichnet, dass**
das Klemmelement (100) und/oder das Gegenklemmelement (110) durch ein Bauteil gebildet ist.

3. Antennenhalter (10) nach Anspruch 2,
**dadurch gekennzeichnet, dass**
- das mindestens eine Stützelement (103) durch eine Platte gebildet ist, die sich unter einem rechten Winkel von der Innenseite (100i) des Klemmelements (100), insbesondere unter einem rechten Winkel von der Innenseite einer zu der Montagebasis (30) parallelen Trägerplatte des Klemmelements (100), in Richtung auf die Montagebasis (30) erstreckt und parallel zwischen den zwei parallelen Endabschnitten (101, 102) des Klemmelements (100) liegt und/oder
- ein Gegenstützelement (113), das sich in Richtung auf die Montagebasis (30) erstreckt und sich auf der Montagebasis (30) abstützt, durch eine Platte gebildet ist, die sich unter einem rechten Winkel von der Innenseite (100i) des Gegenklemmelements (110), insbesondere unter einem rechten Winkel von der Innenseite einer zu der Montagebasis (30) parallelen Trägerplatte des Gegenklemmelements (110), in Richtung auf die Montagebasis (30) erstreckt und parallel zwischen zwei parallelen Endabschnitten (111, 112) des Gegenklemmelements (110) liegt.

4. Antennenhalter (10) nach Anspruch 2 oder 3,
**dadurch gekennzeichnet, dass**
- das mindestens eine Stützelement (103) mittig zwischen den zwei parallelen Endabschnitten (101, 102) des Klemmelements (100) angeordnet ist und/oder
- das Gegenstützelement (113) mittig zwischen den zwei parallelen Endabschnitten (111, 112) des Gegenklemmelements (110) angeordnet ist.

5. Antennenhalter (10) nach einem der voranstehenden Ansprüche 2 bis 4, **dadurch gekennzeichnet, dass**
- zwischen dem mindestens einen Stützelement (103) und einem der zwei parallelen Endabschnitte (101, 102) des Klemmelements (100) zumindest ein erstes zusätzliches Stützelement (400) und zwischen dem mindestens einen Stützelement (103) und dem anderen der zwei parallelen Endabschnitte (101, 102) des Klemmelements (100) zumindest ein zweites zusätzliches Stützelement (410) angebracht oder angeformt ist und/oder
- zwischen dem Gegenstützelement (113) und einem der zwei parallelen Endabschnitte (111, 112) des Gegenklemmelements (110) zumindest ein erstes zusätzliches Gegenstützelement (500) und zwischen dem Gegenstützelement (113) und dem anderen der zwei parallelen Endabschnitte (111, 112) des Gegenklemmelements (110) zumindest ein zweites zusätzliches Gegenstützelement (510) angebracht oder angeformt ist.

6. Antennenhalter (10) nach Anspruch 5, **dadurch gekennzeichnet, dass**
- das mindestens eine Stützelement (103) mittig zwischen den zwei parallelen Endabschnitten (101, 102) des Klemmelements (100) angeordnet ist und sich - entlang der Mastlängsrichtung in Richtung Montagebasis (30) gesehen - zumindest abschnittsweise unterhalb des Mastfußes (81) befindet, und/oder
- das Gegenstützelement (113) mittig zwischen den zwei parallelen Endabschnitten (111, 112) des Gegenklemmelements (110) angeordnet ist und sich - entlang der Mastlängsrichtung in Richtung Montagebasis (30) gesehen - zumindest abschnittsweise unterhalb des Mastfußes (81) befindet.

7. Antennenhalter (10) nach einem der voranstehenden Ansprüche 5 - 5,
**dadurch gekennzeichnet, dass**
- sich das mindestens eine Stützelement (103) und das Gegenstützelement (113) unmittelbar gegenüberliegen,
- sich das zumindest eine erste zusätzliche Stützelement (400) und das zumindest eine erste zusätzliche Gegenstützelement (500) unmittelbar gegenüberliegen,
- sich das zumindest eine zweite zusätzliche Stützelement (400) und das zumindest eine zweite zusätzliche Gegenstützelement (500) unmittelbar gegenüberliegen,
- sich einer der zwei parallelen Endabschnitte (101) des Klemmelements (100) und einer der zwei parallelen Endabschnitte (111) des Gegenklemmelements (110) unmittelbar gegenüberliegen und
- sich der andere der zwei parallelen Endabschnitte (102) des Klemmelements (100) und der andere der zwei parallelen Endabschnitte (112) des Gegenklemmelements (110) unmittelbar gegenüberliegen.

8. Antennenhalter (10) nach einem der voranstehenden Ansprüche,
- die Anordnung des mindestens einen Stützelements (103), der zwei zusätzlichen Stützelemente (400, 410) sowie der zwei parallelen Endabschnitte (101, 102) des Klemmelements (100) äquidistant zum jeweiligen Nachbarn ist,
- die Anordnung des Gegenstützelements (113), der zwei zusätzlichen Gegenstützelemente (500, 510) sowie der zwei parallelen Endabschnitte (111, 112) des Gegenklemmelements (110) äquidistant zum jeweiligen Nachbarn ist und
- jeweils mindestens eine Schraubverbindung (150) zwischen den Endabschnitten und den zusätzlichen Stütz- bzw. Gegenstützelementen und jeweils mindestens eine Schraubverbindung (150) zwischen den zusätzlichen Stütz- bzw.- Gegenstützelementen und dem dazwischen liegenden Stütz- bzw.- Gegenstützelement (103, 113) angeordnet ist.

9. Antennenhalter (10) nach einem der voranstehenden Ansprüche,
**dadurch gekennzeichnet, dass** das mindestens eine Stützelement (103) - entlang der Mastlängsrichtung in Richtung Montagebasis (30) gesehen - zumindest abschnittsweise unterhalb des Mastfußes (81) und/oder unterhalb des Durchgangsloches (104) liegt.

10. Antennenhalter (10) nach einem der voranstehenden Ansprüche,
**dadurch gekennzeichnet, dass**
der Mastfuß (81) sowohl auf der der Montagebasis (30) abgewandten Außenseite des Klemmelements (100) an dem Klemmelement (100) befestigt, insbesondere verschweißt, als auch auf der der Montagebasis (30) zugewandten Innenseite des Klemmelements (100) an dem Klemmelement (100) befestigt, insbesondere verschweißt, ist.

11. Antennenhalter (10) nach einem der voranstehenden Ansprüche,
**dadurch gekennzeichnet, dass**
der Mastfuß (81) an dem mindestens einen Stützelement (103) befestigt, vorzugsweise angeschweißt, ist.

12. Antennenhalter (10) nach einem der voranstehenden Ansprüche,
**dadurch gekennzeichnet, dass**
- der Mastfuß (81) auf der der Montagebasis (30) abgewandten Außenseite des Klemmelements (100) an dem Klemmelement (100) befestigt, insbesondere mittels einer außenliegenden Schweißnaht verschweißt, ist,
- der Mastfuß (81) auf der der Montagebasis (30) zugewandten Innenseite des Klemmelements (100) an dem Klemmelement (100) befestigt, insbesondere mittels einer innenliegenden Schweißnaht verschweißt, ist und
- das mindestens eine Stützelement (103) mit dem durch das Durchgangsloch (104) hindurch geführten Abschnitt des Mastfußes (81) verbunden, insbesondere - vorzugsweise mittels einer zusätzlichen Schweißnaht oder mittels eines oder mehrerer Schweißpunkte, verschweißt ist.

13. Antennenhalter (10) nach einem der voranstehenden Ansprüche,
**dadurch gekennzeichnet, dass**
das mindestens eine Stützelement (103) durch eine Platte gebildet ist, die sowohl an der Innenseite (100i) des Klemmelements (100) als auch an dem Mastfuß (81) angeschweißt ist.

## Claims

1. Antenna holder (10) having a mounting base (30), an antenna mast (80) and holding means (90) for fixing the antenna mast (80) to the mounting base (30),
- the mounting base (30) comprising at least two interengaging sliding elements, specifically an outer element which is formed by an outer tube (40) and an inner element which is formed by an inner tube (50) engaging in the outer tube (40) or a rod engaging in the outer tube (40),
- the holding means (90) having a clamping element (100) and a mating clamping element (110), which can be connected to each other in such a way that the clamping element (100) and the mating clamping element (110) clamp in a section of the mounting base (30),
- the clamping element (100) having two parallel end sections (101, 102), which each form an outer supporting wall and are supported on the mounting base (30), and
- the mast foot (81) being attached to the clamping element (100),
**characterized in that**
- on the inner side of the clamping element (100) there is arranged at least one supporting element (103), which extends in the direction of the mounting base (30) and is supported on the mounting base (30),
- in the region of the mast foot (81), the clamping element (100) has a through hole (104), through which the mast foot (81) is led, and
- the section of the mast foot (81) that is led through the through hole (104) rests on the at least one supporting element (103).

2. Antenna holder (10) according to Claim 1,
**characterized in that**
the clamping element (100) and/or the mating clamping element (110) is/are formed by one component.

3. Antenna holder (10) according to Claim 2,
**characterized in that**
- the at least one supporting element (103) is formed by a plate, which extends in the direction of the mounting base (30) at a right angle from the inner side (100i) of the clamping element (100), in particular at a right angle from the inner side of a carrier plate of the clamping element (100) that is parallel to the mounting base (30), and lies parallel between the two parallel end sections (101, 102) of the clamping element (100), and/or
- a mating supporting element (113), which extends in the direction of the mounting base (30) and is supported on the mounting base (30), is formed by a plate, which extends in the direction of the mounting base (30) at a right angle from the inner side (100i) of the mating clamping element (110), in particular at a right angle from the inner side of a carrier plate of the mating clamping element (110) that is parallel to the mounting base (30), and lies parallel between two parallel end sections (111, 112) of the mating clamping element (110).

4. Antenna holder (10) according to Claim 2 or 3,
**characterized in that**
- the at least one supporting element (103) is arranged centrally between the two parallel end sections (101, 102) of the clamping element (100), and/or
- the mating supporting element (113) is arranged centrally between the two parallel end sections (111, 112) of the mating clamping element (110).

5. Antenna holder (10) according to one of the preceding Claims 2 to 4,
**characterized in that**
- at least one first additional supporting element (400) is fitted or moulded on between the at least one supporting element (103) and one of the two parallel end sections (101, 102) of the clamping element (100), and at least one second additional supporting element (410) is fitted or moulded on between the at least one supporting element (103) and the other of the two parallel end sections (101, 102) of the clamping element (100), and/or
- at least one first additional mating supporting element (500) is fitted or moulded on between the mating supporting element (113) and one of the two parallel end sections (111, 112) of the mating clamping element (110), and at least one second additional mating supporting element (510) is fitted or moulded on between the mating supporting element (113) and the other of the two parallel end sections (111, 112) of the mating clamping element (110).

6. Antenna holder (10) according to Claim 5, **characterized in that**
- the at least one supporting element (103) is arranged centrally between the two parallel end sections (101, 102) of the clamping element (100) and - seen along the mast longitudinal direction in the direction of the mounting base (30) - is located underneath the mast foot (81), at least in some sections, and/or
- the mating supporting element (113) is arranged centrally between the two parallel end sections (111, 112) of the mating clamping element (110) and - seen along the mast longitudinal direction in the direction of the mounting base (30) - is located underneath the mast foot (81), at least in some sections.

7. Antenna holder (10) according to one of the preceding Claims 5 - 6,
**characterized in that**
- the at least one supporting element (103) and the mating supporting element (113) are directly opposite,
- the at least one first additional supporting element (400) and the at least one first additional mating supporting element (500) are directly opposite,
- the at least one second additional supporting element (400) and the at least one second additional mating supporting element (500) are directly opposite,
- one of the two parallel end sections (101) of the clamping element (100) and one of the two parallel end sections (111) of the mating clamping element (110) are directly opposite, and
- the other of the two parallel end sections (102) of the clamping element (100) and the other of the two parallel end sections (112) of the mating clamping element (110) are directly opposite.

8. Antenna holder (10) according to one of the preceding claims,
- the arrangement of the at least one supporting element (103), the two additional supporting elements (400, 410) and the two parallel end sections (101, 102) of the clamping element (100) is equidistant from the respective neighbour,
- the arrangement of the mating supporting element (113), the two additional mating supporting elements (500, 510) and the two parallel end sections (111, 112) of the mating clamping element (110) is equidistant from the respective neighbour, and
- in each case at least one screw connection (150) is arranged between the end sections and the additional supporting or mating supporting elements, and in each case at least one screw connection (150) is arranged between the additional supporting or mating supporting elements and the supporting or mating supporting element (103, 113) located in between.

9. Antenna holder (10) according to one of the preceding claims,
**characterized in that**
the at least one supporting element (103) - seen along the mast longitudinal direction in the direction of the mounting base (30) - is located underneath the mast foot (81) and/or underneath the through hole (104), at least in some sections.

10. Antenna holder (10) according to one of the preceding claims,
**characterized in that**
the mast foot (81) is both fixed, in particular welded, to the clamping element (100) on the outer side of the clamping element (100) that faces away from the mounting base (30), and fixed, in particular welded, to the clamping element (100) on the inner side of the clamping element (100) that faces the mounting base (30).

11. Antenna holder (10) according to one of the preceding claims,
**characterized in that**
the mast foot (81) is fixed, preferably welded, to the at least one supporting element (103).

12. Antenna holder (10) according to one of the preceding claims,
**characterized in that**
- the mast foot (81) is fixed to the clamping element (100) on the outer side of the clamping element (100) facing away from the mounting base (30), in particular welded by means of a weld located on the outside,
- the mast foot (81) is fixed to the clamping element (100) on the inner side of the clamping element (100) facing the mounting base (30), in particular welded by means of a weld located on the inside, and
- the at least one supporting element (103) is connected to the section of the mast foot (81) this is led through the through hole (104), in particular welded - preferably by means of an additional weld or by means of one or more spot welds.

13. Antenna holder (10) according to one of the preceding claims,
**characterized in that**
the at least one supporting element (103) is formed by a plate, which is welded both to the inner side (100i) of the clamping element (100) and to the mast foot (81).

## Revendications

1. Support d'antennes (10) avec une base de montage (30), un mât d'antenne (80) et des moyens d'attache (90) pour la fixation du mât d'antenne (80) à la base de montage (30),
- dans lequel la base de montage (30) comprend au moins deux éléments coulissants engagés l'un dans l'autre, notamment un élément extérieur, qui est formé par un tube extérieur (40), et un élément intérieur, qui est formé par un tube intérieur (50) engagé dans le tube extérieur (40) ou par une tige engagée dans le tube extérieur (40),
- dans lequel les moyens d'attache (90) présentent un élément de serrage (100) et un contre-élément de serrage (110), qui peuvent être assemblés l'un à l'autre de telle manière que l'élément de serrage (100) et le contre-élément de serrage (110) enserrent une partie de la base de montage (30),
- dans lequel l'élément de serrage (100) présente deux parties d'extrémité parallèles (101, 102), qui forment respectivement une paroi d'appui extérieure et qui s'appuient sur la base de montage (30), et
- dans lequel le pied de mât (81) est installé sur l'élément de serrage (100),
**caractérisé en ce que**
- au moins un élément d'appui (103) est disposé sur le côté intérieur de l'élément de serrage (100), lequel s'étend en direction de la base de montage (30) et s'appuie sur la base de montage (30),
- l'élément de serrage (100) présente dans la région du pied de mât (81) un trou de passage (104), à travers lequel le pied de mât (81) est mené, et
- la partie du pied de mât (81) menée à travers le trou de passage (104) repose sur ledit au moins un élément d'appui (103).

2. Support d'antennes (10) selon la revendication 1, **caractérisé en ce que** l'élément de serrage (100) et/ou le contre-élément de serrage (110) est formé par une pièce.

3. Support d'antennes (10) selon la revendication 2, **caractérisé en ce que**
- ledit au moins un élément d'appui (103) est formé par une plaque, qui s'étend sous un angle droit à partir du côté intérieur (100i) de l'élément de serrage (100), en particulier sous un angle droit à partir du côté intérieur d'une plaque de support de l'élément de serrage (100) parallèle à la base de montage (30), en direction de la base de montage (30) et est placée parallèlement entre les deux parties d'extrémité parallèles (101, 102) de l'élément de serrage (100), et/ou
- un contre-élément d'appui (113), qui s'étend en direction de la base de montage (30) et qui s'appuie sur la base de montage (30), est formé par une plaque, qui s'étend sous un angle droit à partir du côté intérieur (100i) du contre-élément de serrage (110), en particulier sous un angle droit à partir du côté intérieur d'une plaque de support du contre-élément de serrage (110) parallèle à la base de montage (30), en direction de la base de montage (30), et est placée parallèlement entre les deux parties d'extrémité parallèles (111, 112) du contre-élément de serrage (110).

4. Support d'antennes (10) selon la revendication 2 ou 3, **caractérisé en ce que**
- ledit au moins un élément d'appui (103) est disposé au milieu entre les deux parties d'extrémité parallèles (101, 102) de l'élément de serrage (100) et/ou
- le contre-élément d'appui (113) est disposé au milieu entre les deux parties d'extrémité parallèles (111, 112) du contre-élément de serrage (110).

5. Support d'antennes (10) selon une des revendications 2 à 4, **caractérisé en ce que**
- au moins un premier élément d'appui supplémentaire (400) est placé ou formé entre ledit au moins un élément d'appui (103) et une des deux parties d'extrémité parallèles (101, 102) de l'élément de serrage (100) et au moins un deuxième élément d'appui supplémentaire (410) est placé ou formé entre ledit au moins un élément d'appui (103) et l'autre des deux parties d'extrémité parallèles (101, 102) de l'élément de serrage (100), et/ou
- au moins un premier contre-élément d'appui supplémentaire (500) est placé ou formé entre ledit au moins un contre-élément d'appui (113) et une des deux parties d'extrémité parallèles (111, 112) du contre-élément de serrage (110) et au moins un deuxième contre-élément d'appui supplémentaire (510) est placé ou formé entre ledit au moins un contre-élément d'appui (113) et l'autre des deux parties d'extrémité parallèles (111, 112) du contre-élément de serrage (110).

6. Support d'antennes (10) selon la revendication 5, **caractérisé en ce que**
- ledit au moins un élément d'appui (103) est disposé au milieu entre les deux parties d'extrémité parallèles (101, 102) de l'élément de serrage (100) et se trouve - vu le long de la direction longitudinale du mât en direction de la base de montage (30) - au moins en partie en dessous du pied de mât (81), et/ou
- le contre-élément d'appui (113) est disposé au milieu entre les deux parties d'extrémité parallèles (111, 112) du contre-élément de serrage (110) et se trouve
- vu le long de la direction longitudinale du mât en direction de la base de montage (30) - au moins en partie en dessous du pied de mât (81).

7. Support d'antennes (10) selon l'une quelconque des revendications précédentes 5 et 6, **caractérisé en ce que**
- ledit au moins un élément d'appui (103) et le contre-élément d'appui (113) se font face directement,
- ledit au moins un premier élément d'appui supplémentaire (400) et ledit au moins un premier contre-élément d'appui supplémentaire (500) se font face directement,
- ledit au moins un deuxième élément d'appui supplémentaire (400) et ledit au moins un deuxième contre-élément d'appui supplémentaire (500) se font face directement,
- une des deux parties d'extrémité parallèles (101) de l'élément de serrage (100) et une des deux parties d'extrémité parallèles (111) du contre-élément de serrage (110) se font face directement, et
- l'autre des deux parties d'extrémité parallèles (102) de l'élément de serrage (100) et l'autre des deux parties d'extrémité parallèles (112) du contre-élément de serrage (110) se font face directement.

8. Support d'antennes (10) selon l'une quelconque des revendications précédentes,
- l'agencement dudit au moins un élément d'appui (103), des deux éléments d'appui supplémentaires (400, 410) ainsi que des deux parties d'extrémité parallèles (101, 102) de l'élément de serrage (100) est équidistant du voisin respectif,
- l'agencement du contre-élément d'appui (113), des deux contre-éléments d'appui supplémentaires (500, 510) ainsi que des deux parties d'extrémité parallèles (111, 112) du contre-élément de serrage (110) est équidistant du voisin respectif, et
- au moins un assemblage vissé (150) est chaque fois disposé entre les parties d'extrémité et les éléments et contre-éléments d'appui supplémentaires et au moins un assemblage vissé (150) est chaque fois disposé entre les éléments et contre-éléments d'appui supplémentaires et l'élément ou le contre-élément d'appui (103, 113) placé entre eux.

9. Support d'antennes (10) selon l'une quelconque des revendications précédentes, **caractérisé en ce que** ledit au moins un élément d'appui (103) - vu le long de la direction longitudinale du mât en direction de la base de montage (30) - est situé au moins en partie en dessous du pied de mât (81) et/ou en dessous du trou de passage (104).

10. Support d'antennes (10) selon l'une quelconque des revendications précédentes, **caractérisé en ce que** le pied de mât (81) est aussi bien fixé, en particulier soudé, à l'élément de serrage (100) sur le côté extérieur de l'élément de serrage (100) détourné de la base de montage (30) que fixé, en particulier soudé, sur le côté intérieur de l'élément de serrage (100) tourné vers la base de montage (30).

11. Support d'antennes (10) selon l'une quelconque des revendications précédentes, **caractérisé en ce que** le pied de mât (81) est fixé, de préférence soudé, audit au moins un élément d'appui (103).

12. Support d'antennes (10) selon l'une quelconque des revendications précédentes, **caractérisé en ce que**
- le pied de mât (81) est fixé, en particulier soudé au moyen d'un cordon de soudure extérieur, à l'élément de serrage (100) sur le côté de l'élément de serrage (100) détourné de la base de montage (30),
- le pied de mât (81) est fixé, en particulier soudé au moyen d'un cordon de soudure intérieur, à l'élément de serrage (100) sur le côté de l'élément de serrage (100) tourné vers la base de montage (30), et
- ledit au moins un élément d'appui (103) est assemblé à la partie du pied de mât (81) menée à travers le trou de passage (104), en particulier est soudé de préférence au moyen d'un cordon de soudure supplémentaire ou au moyen d'un ou de plusieurs points de soudure.

13. Support d'antennes (10) selon l'une quelconque des revendications précédentes, **caractérisé en ce que** ledit au moins un élément d'appui (103) est formé par une plaque, qui est soudée aussi bien au côté intérieur (100i) de l'élément de serrage (100) qu'au pied de mât (81).
